# EUROPEAN PATENT APPLICATION

(11) **EP 4 506 061 A1**
(43) Date of publication of application: **12.02.2025**
(21) Application number: 24193490.0
(22) Date of filing: 08.08.2024
(51) Int. Cl.: B01L 9/06, G01N 35/04

(54) **MODULAR SAMPLE RACK**

(30) Priority: 08.08.2023 LU 103182
(71) Applicant: Stratec SE, 75217 Birkenfeld (DE)
(72) Inventor: Horvath, Tibor, 75217 Birkenfeld (DE); Stieß, Erich, 75217 Birkenfeld (DE)
(74) Representative: Tegethoff, Sebastian

(57) **Abstract**

The present disclosure provides a rack for automated analyser systems, the rack comprising a combination of units selected from the following groups, a handle representing an interface to a user; a middle section comprising compartments for receiving container; and
an end piece representing an interface to a loading section. A system comprising saud rack an container configured to fit in the compartment is also disclosed. The system can be part of an automated analyser system or comprise an automated analyser system.

## Description

### Field of the Invention

The invention relates to a modular sample rack.

### Brief description of the related art

Devices for use in clinical diagnostics and life sciences are produced by a number of companies. For example, STRATEC^{®} SE, Germany, manufactures numerous devices for diagnostic specimen handling and detection for use in automated analyser systems and other laboratory instrumentation.

Racks are used in medical analysers to feed samples into containers. There are different designs of racks for the different numbers and variants of containers as well as for different analysis devices in which racks are used. The design of a rack depends, for example, on the handle, the containers used and the available installation space in the analysis device.

Prior art racks are manufactured in one piece and differ, for example, in the size and geometry of the rack, the handle for the user, the number of containers they can hold, the type of container fixing mechanism and the rack coding.

Published International application WO 2012/122301 A2 discloses tube holder modules for holding centrifuge microtubes during storage and environmental processing are provided. The tube holder modules may help prevent a microtube from popping open due to pressure buildup inside the microtube, and may also be equipped with interface features which may interlock with interface features on other tube holder modules, allowing for a modular system for constructing microtube holder racks. Some implementations may include a relatively large, flat surface on the top side of the module to allow for easy labeling of microtube(s) held by the tube holder modules.

Published U.S. patent application US 2017/023561 A1 discloses an apparatus which has a containing body with a flat upper functional floor for containing receptacles of reagents, diluents and samples, as well as housings for gel cards and incubators for the same; a lower floor containing receptacles for washing liquids and the collection of waste and cards and for housing the fluid control and electronic control system; a series of longitudinal and transverse guides associated with the upper part of the apparatus, suitable for carrying in suspension the moving heads of the apparatus, the heads being movable on the transverse guides; two heads, respectively for perforation and pipetting and for the transport of gel cards; two centrifuges and a gel card reader; and a folding touch screen providing information and control.

Published European patent application EP 4 184 173 A1 relates to aspects of an automated analytical system. In particular, it relates to a method for introducing a sample rack holding a plurality of sample receptacles into a receiving bay in a housing of an automated analytical system. The method is carried out by manually moving the sample rack from a loading position towards a processing position along a lane in the receiving bay. The movement is paused when the rack reaches a focusing position between the two above-mentioned terminal positions, where a proximal stopping element provides sufficient resistance for the movement of the rack to be hindered. In this position, a reader in essentially the same horizontal plane is moved so as to focus on the lane in the receiving bay and thus the sample rack being inserted into the lane. With the reader so focused, the movement of the sample rack towards the processing position is resumed past the proximal stopping element and all the way to the processing position, while the reader detects features of the sample rack and/or the plurality of sample receptacles. The processing position is defined by a distal stopping element, marking the endpoint of the insertional movement of the sample rack. In this terminal position, the rack is positioned, detected in this position, and then locked for alignment with regard to the following processing of the content of the sample receptacles.

Published U.S. patent application US 2010/288056 A1 discloses a structure for holding sample-containing receptacles includes a cover with holes formed therein through which the receptacles can be accessed with a substance transfer mechanism, such as a robotic pipettor. When the transfer mechanism is inserted into and then withdrawn from a receptacle, a string of viscous material may be suspended from the mechanism. A viscous string removal element adjacent each opening engages the string of viscous material and dislodges the string from the mechanism when the mechanism moves in a prescribed path with respect to the removal element. A sample rack configured to hold receptacles and to be inserted into the structure below the cover includes a sample rack having receptacle-receiving pockets, each with a resilient element and a positioning feature for holding receptacles of varying sizes in a predetermined position within the receptacle receiving pocket, and a cover including features for preventing a receptacle from being pulled out of its receptacle-receiving pocket when the transfer mechanism is withdrawn from the receptacle.

Published U.S. patent application US 2018/372768 A1 provides methods for the automated loading and/or automatic processing of one or more samples in an automated sample processing device. Also provided are automated sample loading systems and devices that include automated sample loading systems or devices that are utilized in such systems.

Published U.S. patent application US 2020/122149 A1 A discloses a sample rack which includes a housing that has multiple spaces or compartments each for receiving and retaining sample containers of various sizes. The sample rack includes dual hooks on the ends for engaging a sample rack handling system. Chamfers formed in the housing of the sample rack assist in placing and removing the sample rack from a sample rack handling system. The sample tube rack also includes a handle that extends upward from one end and includes gripping features, groove and bar, incorporated into each sample rack, are able to selectively interlock with adjacent racks to assist in lifting multiple sample racks together.

Disadvantages of prior art racks relate to limitations in the manufacturing process as well as a providing a low flexibility in applicability.

Thus, there is a need for a rack which can easily be adapted to the respective application.

### Summary of the Invention

The present invention provides a rack for automated analyser systems, the rack containing a combination of units selected from the following groups:
- a handle which is arranged on one end of the modular rack, representing an interface to a user;
- a middle section comprising compartments for receiving container; and
- an end piece representing an interface to a loading section.

The rack may comprise in an embodiment a handle that comprises a window for indicating the status of the rack.

It is further envisaged that the handle comprises a flag configured for interrupting a light barrier.

The rack may also comprise a handle comprising a spring-loaded stabilising element.

In another embodiment of a rack according to the present disclosure, the middle section may comprise on one side openings.

It is also envisaged that a compartment of the middle section comprises a spring configured to push a container in an indented position within the compartment.

Another aspect of a rack according to the present disclosure relates to the compartment comprising an offset insert forming the bottom of the compartment, wherein the offset insert can be fixed at different heights in the compartment.

In an embodiment, the middle section comprises identical interfaces on both sides.

The rack may comprise an end piece comprising a magnet.

Another aspect of the rack relates to the end piece comprising a flag configured for interrupting a light barrier and/or a hook for automated feeding of the rack. Another object of the present disclosure relates to a first system for mounting a modular rack, comprising
- a group of handles representing an interface to a user which are configured to be arranged on one end of the modular rack;
- a group of middle section comprising compartments for receiving container; and
- a group end piece representing an interface to a loading section;
wherein all member of the groups are configured to be selected and each selected member of a group to be connected with the other members of the respective groups to the modular rack.

Another object of the present disclosure relates to a second system comprising a rack as described above; and a container configured to fit in a compartment of the rack.

The system may comprise in an embodiment a loading section for receiving of at least one rack as described above.

The system may further comprise or be part of an automated analyser system.

Still other aspects, features, and advantages of the present invention are readily apparent from the following detailed description, simply by illustrating preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention.

### Summary of the Figures

The invention will be described based on figures. It will be understood that the embodiments and aspects of the invention described in the figures are only examples and do not limit the protective scope of the claims in any way. The invention is defined by the claims and their equivalents. It will be understood that features of one aspect or embodiment of the invention can be combined with a feature of a different aspect or aspects of other embodiments of the invention, in which:
FIG. 1 shows different embodiments for rack handles, middle sections and end pieces.
FIG. 2 shows the separated units of a modular rack in the correct order.
FIG. 3 shows an exemplary combination of a modular rack.
FIG. 4 shows a handle in detail.
FIG. 5A, B shows a handle with the spring for unfolding stabilising elements on both sides for the rack.
FIG. 6 shows in the left part a front view onto a middle section and in the right part a back view onto the middle section.
FIG. 7 shows a modular rack comprising a middle section with offset inserts.
FIG. 8 shows a single container holder with offset insert, springs and position code.
FIG. 9 shows an end piece with magnet.

### Detailed Description of the Invention and the Figures

The technical problem is solved by the independent claims. The dependent claims cover further specific embodiments of the invention.

The present invention relates to a modular rack which comprises rack units and can be configured according to a so-called modular principle by combining different embodiments from one of the three-unit groups. The resulting rack combinations are versatile in use.

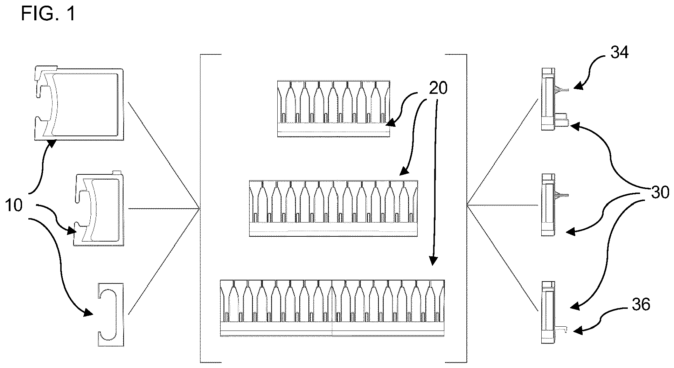

FIG. 1 shows a modular rack comprising the following three units:
- a handle;
- a middle section comprising compartments for receiving a plurality of container;
- an end piece.

The three parts for assembly of a rack according to the present disclosure may have different colours. The different colours may result from different materials of which the respective parts are made. The colours can be used for indicating the content of a rack which is for instance related to a specific colour of the handle.

The handle which is arranged on one end of the modular rack is the interface to the user. The user transports the rack via the handle, e.g. to a loading unit of an automated analyser. The containers for samples are placed in compartments in the middle section. The compartments of the middle part of the rack comprise container holders, which are provided with position codes for the allocation of the respective container. The coded containers comprising samples are inserted into these receptacles in the modular rack. In order for the analyser to have an assignment between the coded container receptacles and the containers, the position codes on the container receptacles as well as the codes on the containers are read by a code reader of an automated analyser, e.g. a barcode reader on the analyser when the rack is inserted in the loading station. For this reason, it is important to know on which side of the rack the code reader is located in a loading station for choosing the correct orientation of the middle section. The end piece of the rack is the connection of the modular rack to the analyser. The end piece may comprise depending on the application locking mechanisms for the modular rack for locking it in the loading unit of an automated analyser.

The modularised design of the rack according to the present disclosure allows to select or combine an appropriate embodiment from the respective modular unit group comprising handle, middle section, and end section. The embodiments of the individual units differ in their function and design, so that a variety of different rack combinations can be put together.

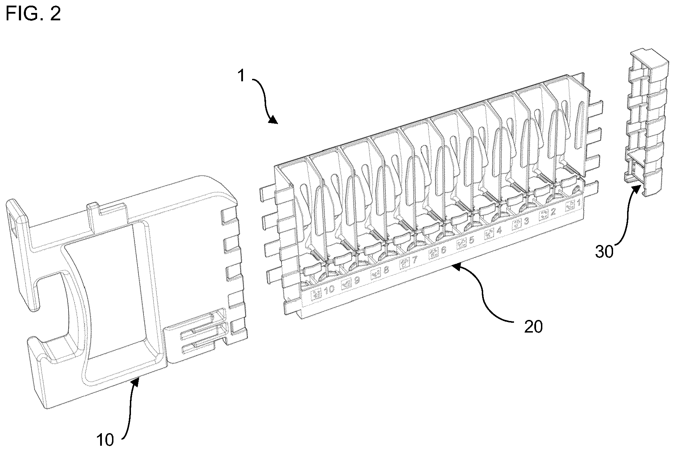

FIG. 1 shows in its left part different embodiments for rack handles 10, in its middle part different embodiments of middle sections 20 and in its right part different embodiments of end pieces 30. The individual units are connected to each other via interfaces, e.g. plug-in connections (comp. FIG. 2). At the connection interfaces of the rack handle and end piece there is the "female" part of the plug-in connection and on both sides of the centre part there is the "male" counterpart for the plug-in connection. Alternatively, the plug-in connections can be interchanged so that the centre section has the "female" plug connection at both ends. A predefined sequence of handle, middle part and end piece is maintained via the plug-in connection. Furthermore, as shown in FIG. 1, there can be a flag 34 at the end piece of the rack, which enables detection via a light barrier at the loading station. Alternatively, the end piece may comprise a hook 36 for an automated feeding og the rack.

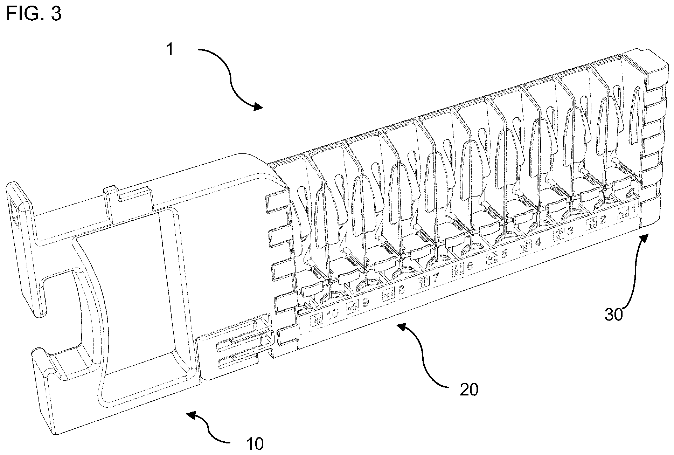

The units can be reversibly (e.g. plug-in connection) or irreversibly (e.g. plug-in connection with adhesive) connected to each other at the connection interfaces. Further connection interfaces or a combination of several connection mechanisms, such as a plug-in connection with an additional securing by screws, are also conceivable. FIG. 3 shows an exemplary combination of a modular rack 1.

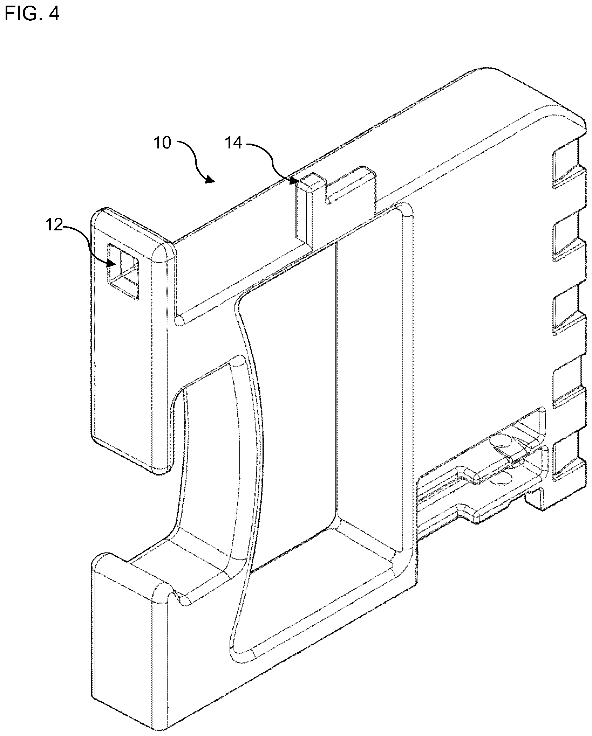

FIG. 1 shows three different embodiments of rack handles 10 in its left part. The rack handle 10 (comp. FIG. 4) is the interface to the user and represents a separate unit, so that the individual units (handle, middle part, end piece) can be produced using different manufacturing processes, e.g. injection moulding. Depending on the specifications for the respective application, the handle 10 is selected from the unit group "Handle" or optionally redesigned if there is no suitable handle comprised in the unit group. The handle is selected by the customer in order to fit into his product range in terms of look and feel. The handle can also be designed to form a part of the front section of an automated analyser when the rack is inserted into the automated analyser or its loading unit.

The handle can optionally provide additional functions like a status display via a window 12. As soon as the rack is pushed into the loading station on the analyser, a light strip or LED attached to the analyser is located near the window 12 (comp. FIG. 4). The optical detection signal, e.g. window with an LED on the analyser, informs the user when the rack can be removed. Furthermore, a presence detection may be provided by a flag 14 on the handle 10 which interrupts a light barrier on the automated analyser (comp. FIG. 4). In addition, a closing function is also possible, e.g. via a push-push function. This can be located, for example, on the upper edge of the rack handle similar to the flag (not shown).

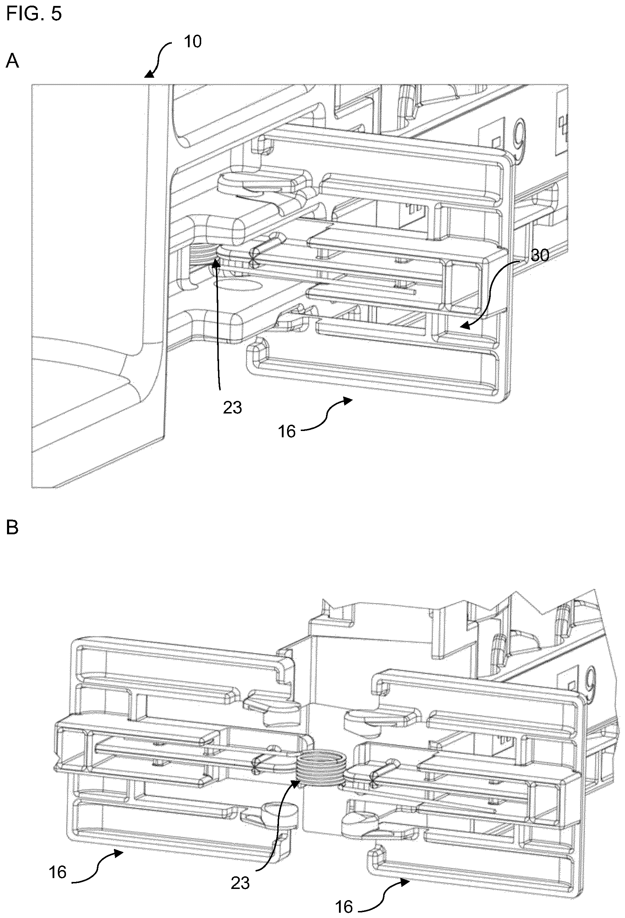

Furthermore, a stabilising element 16 for the rack can be attached to both sides of the handle 10 as shown in FIG. 5. Springs on the sides of the rack automatically unfold so-called wings near the connection to the middle section 20 and provide lateral stability for the rack, preventing it from tipping over. When the rack is pushed into the loading station, the wings are automatically folded in.

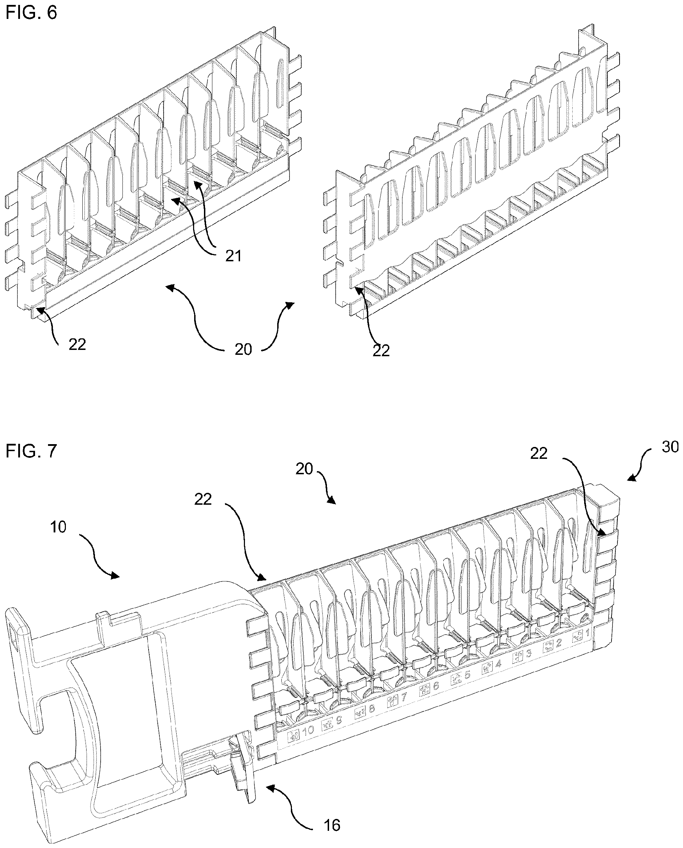

In the middle of FIG. 1, different middle sections 20 of the rack 1 are shown. The middle section 20 is designed to receive containers and the number of compartments defines the number of containers that can be received (e.g. 10/12/16) in the rack. The left part of FIG. 6 shows a front view onto a middle section 20 comprising openings 21 so that a barcode reader can read bar codes on the container. The right part of FIG. 6 shows a back view of the middle section 20.

It can be taken from FIG. 6 that there are identical interfaces 22 on both sides of the middle section 20 for connecting the middle section to the handle (comp. FIG. 7) as well as to the end piece of the rack. Due to the identical interfaces 22 at both ends of the middle section 20, the middle section 20 of the rack can be rotated horizontally by 180°. This has the advantage that the openings 21 of the middle section for the barcodes on the containers can be adapted to the side where the optical interface for reading of labels is arranged in the analyser. Depending on the arrangement of the optical interface, like a barcode reader, the middle section of the rack can be installed accordingly so that the openings of the container holder and the corresponding position codes on the middle part of the rack are located on the corresponding side for the code reader. The labels like position codes are placed on the rack according to the orientation of the centre section in the modular rack. The arrangement of the position codes on the rack must match the reading direction when the rack is placed into the loading station of the analyser. The first position after the end piece is encoded being number 1 and the following positions are coded in ascending order until the last position before the handle (comp. FIG. 7). Furthermore, the rack can also contain an RFID tag.

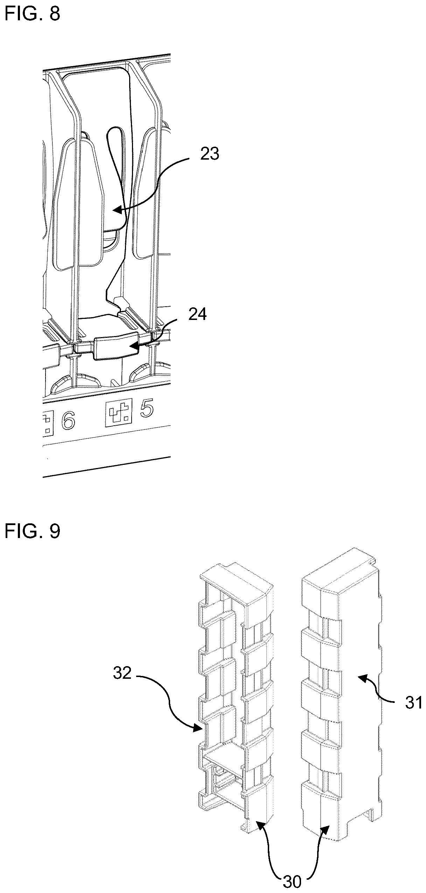

Springs 23 and optional offset inserts 24 can be arranged in a compartment of a middle section (comp. FIG. 8). The springs 23 push the containers that are inserted into the container holders forward and align them on the upper edge of the rack in the X and Y direction.

The offset inserts 24 can be attached at different heights in the compartments to allow the use of container with different heights in a single rack. The offset inserts 24 thus define a bottom of the compartment and provide a uniform height of the containers in the Z-direction. When the rack is pushed into a loading position, the offset inserts are recognised by their white surface via a camera on the analyser and noted as a Z-value in addition to the codes of the container holder and the containers. By recognising the offset inserts, the pipettor knows how deep it may enter the container in the Z-axis at the corresponding container position.

FIG. 9 shows an exemplary end piece 30. The end piece 30 represents the interface to the loading station in the analyser. The end piece shown in FIG. 9 has an integrated magnet 31 or can be made of a magnetic material like a metal. When the rack is pushed in a loading position it is intended that there is a corresponding counterpart like a magnet or metal (not shown) at the end of a loading unit, so that the rack is pulled into the loading station by the magnetic force. The interface 32 of the end piece is also visible in FIG. 9.

Alternatively, other types of locking for the rack are also conceivable, e.g. a push-push function or an automatic handling interface for self-retraction of the rack into the loading station which are shown in FIG.1. The various features can also be integrated in combination in the end piece.

The advantages of the invention relate to
- Increased flexibility due to the versatility of the racks.
- Flexibility of the rack with respect to
   i. size,
   ii. number of containers,
   iii. handle,
   iv. Functions
- Higher flexibility during manufacturing with respect to allowing the use of different manufacturing processes/moulding technologies for individual units.
- Cost saving with respect to unit groups which can be expanded as required, allowing further variants of units without having to redesign the entire rack.

Alternative approaches may relate to embodiments where several rack middle sections can be connected to another. The connection can be seamless or via an additional connecting link.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 1: rack
- 10: handle
- 12: window
- 14: flag
- 16: stabilizing element
- 20: middle section
- 21: opening
- 22: interface middle section
- 23: spring
- 24: offset insert
- 30: end piece
- 31: magnet
- 32: interface end piece
- 34: flag end piece
- 36: hook

## Claims

1. A rack for automated analyser systems, the rack containing a combination of three units selected from the following groups:
- a handle which is arranged on one end of the modular rack, representing an interface to a user;
- a middle section comprising compartments for receiving container; and
- an end piece representing an interface to a loading section.

2. The rack of claim 1, wherein the handle comprises a window for indicating the status of the rack.

3. The rack of claim 1 or 2, wherein the handle comprises a flag configured for interrupting a light barrier.

4. The rack of any one of claims 1 to 3, wherein the handle comprises a spring-loaded stabilising element.

5. The rack of any one of claims 1 to 4, wherein the middle section comprises on one side openings.

6. The rack of any one of claims 1 to 5, wherein a compartment of the middle section comprises a spring configured to push a container in an indented position within the compartment.

7. The rack of any one of claims 1 to 6, wherein the compartment comprises an offset insert forming the bottom of the compartment, wherein the offset insert can be fixed at different heights in the compartment.

8. The rack of any one of claims 1 to 7, wherein the middle section comprises identical interfaces on both sides.

9. The rack of any one of claims 1 to 8, wherein the end piece comprises a magnet.

10. The rack of any one of claims 1 to 9, wherein the end piece comprises a flag configured for interrupting a light barrier and/or a hook for automated feeding of the rack.

11. A first system for mounting a modular rack, comprising
- a group of handles representing an interface to a user which are configured to be arranged on one end of the modular rack;
- a group of middle section comprising compartments for receiving container; and
- a group end piece representing an interface to a loading section;
wherein all member of the groups are configured to be selected and each selected member of a group to be connected with the other members of the respective groups to the modular rack.

12. A second system comprising
- a rack according to any one of claims 1 to 10; and
- a container configured to fit in a compartment of the rack.

13. The second system of claim 12, comprising a loading section for receiving of at least one rack according to any one of claims 1 to 10.

14. The second system of claim 12 or 13, comprising an automated analyser system or being part of an automated analyser system.
